Europäisches Patentamt

European Patent Office

Office européen des brevets

(19)

(11) **EP 0 791 145 B1**

(12) **FASCICULE DE BREVET EUROPEEN**

(45) Date de publication et mention
de la délivrance du brevet:
**08.09.1999 Bulletin 1999/36**

(51) Int Cl.6: **F16F 1/37**, B65D 81/127,
B65D 65/40, B32B 7/04,
F41H 5/04

(21) Numéro de dépôt: **95940312.2**

(22) Date de dépôt: **15.11.1995**

(86) Numéro de dépôt international:
**PCT/FR95/01498**

(87) Numéro de publication internationale:
**WO 96/15388 (23.05.1996 Gazette 1996/23)**

(54) **REVETEMENT AMORTISSEUR DE CHOCS**

BESCHICHTUNG FÜR STOSSDÄMFER

SHOCK DAMPER COATING

(84) Etats contractants désignés:
**AT BE CH DE DK ES GB IT LI NL SE**

(30) Priorité: **16.11.1994 FR 9413723**

(43) Date de publication de la demande:
**27.08.1997 Bulletin 1997/35**

(73) Titulaire: **INSTITUT FRANCAIS DU PETROLE**
**92852 Rueil-Malmaison Cedex (FR)**

(72) Inventeur: **GIRAUD, André**
**F-92300 Levallois-Perret (FR)**

(56) Documents cités:
**EP-A- 0 251 395        WO-A-93/21492**
**US-A- 4 868 040        US-A- 4 923 728**
**US-A- 5 326 606**

## Description

La présente invention concerne l'amortissement des chocs et porte sur les revêtements amortisseurs de chocs destinés à être appliqués au contact d'une zone à protéger.

De tels revêtements peuvent trouver de multiples applications. On citera, à titre d'exemples, sans que cette liste soit aucunement limitative, la protection des objets dans des emballages, la protection d'installations statiques ou mobiles contre les projectiles de différentes sortes (par exemple les éclats, les missiles, etc.), la protection des pétroliers et des plates-formes pétrolières en mer, et des terminaux portuaires contre les objets dérivants, la protection d'installations sensibles (centrales nucléaires, usines dangereuses) contre la chute d'avions, des cabines téléphériques, etc.

En dehors de la protection contre les chocs dans des applications du type de celles qui viennent d'être indiquées, les revêtements protecteurs selon l'invention peuvent également trouver des applications dans la protection contre les explosions. Toutefois, comme cela apparaîtra ci-après, la structure du revêtement selon l'invention a été élaborée pour pouvoir élargir la zone d'écrasement du revêtement par rapport à la zone d'impact ; il en résulte que ce revêtement sera utile dans le cas où l'onde de choc provoquée par l'explosion produit un impact localisé. Il peut en être ainsi, par exemple, s'il s'agit de protéger une coque de navire contre l'effet de mines ou de charges qui agissent au contact de la coque.

Lorsque deux corps en mouvement l'un par rapport à l'autre se rencontrent, le choc produit des contraintes au point d'impact, et ces contraintes déforment les deux mobiles. Ces déformations sont plus ou moins importantes selon la dureté du corps considéré ; en outre, pour les valeurs les plus faibles des contraintes (en-dessous de la limite élastique qui varie selon les corps et peut même varier selon la vitesse de l'impact), la déformation est réversible : l'énergie de l'impact est absorbée par la déformation, puis restituée en renvoyant le mobile "agresseur". Au-delà de la limite élastique, le corps est "écrasable" et la déformation est irréversible. L'énergie de l'impact est alors absorbée sous la forme du travail nécessaire pour produire la déformation (écrasement, déplacement interne, fractures, etc.). Ce mécanisme est utilisé couramment pour protéger une surface ou un volume contre les impacts à l'aide d'une couche de matériau amortisseur.

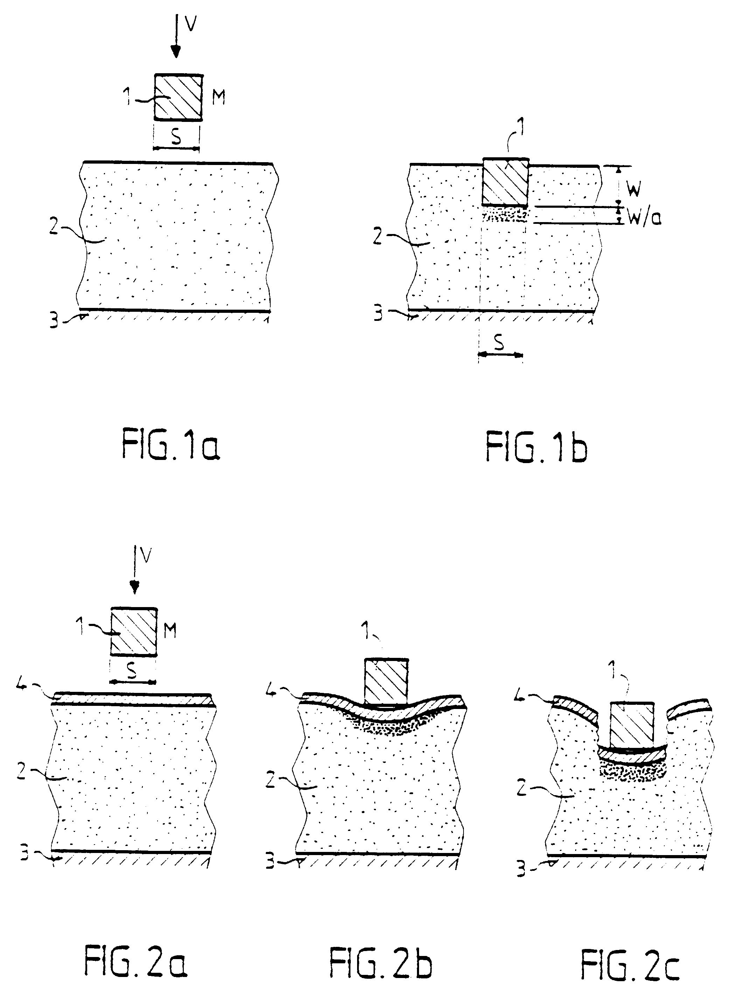

Il existe ainsi des matériaux amortisseurs, tels que des mousses de matière plastique, de verre, ou autres, ou des produits fortement poreux, tels que les empilements de billes creuses, qui absorbent une énergie proportionnelle au volume écrasé, comme cela est indiqué sur le schéma de la Figure 1. Sur la Figure 1a, on a représenté un mobile 1 lors de sa chute sur un matériau amortisseur 2 ou matériau d'écrasement, recouvrant une surface 3 devant être protégée. Le mobile 1 pénètre dans le matériau d'écrasement 2, et il s'enfonce d'un volume W du matériau d'écrasement 2, ce qui le ralentit (Figure 1b). L'énergie absorbée correspond à celle qui est nécessaire pour comprimer ce volume W du matériau d'écrasement 2 en un volume W/a, a étant le coefficient d'écrasement. Ce volume écrasé W/a est mis en mouvement devant le mobile 1, en augmentant au fur et à mesure que ce dernier progresse, jusqu'à ce qu'il s'arrête si l'épaisseur du matériau d'écrasement 2 est suffisante, c'est-à-dire lorsque l'énergie consommée par la compaction est égale à l'énergie initiale du mobile 1. Sinon, la surface à protéger 3 doit elle-même absorber l'énergie résiduelle.

Pour un matériau 2 dont la contrainte d'écrasement est $Y_e$, l'avancement X du mobile 1 de masse M et vitesse V, exerçant l'impact sur une surface S est, en première approximation :

$$X = \frac{1}{2} \frac{MV^2}{Y_e S} \qquad (I)$$

Le matériau d'écrasement 2 non encore écrasé transmet à la surface à protéger 3 des contraintes qui doivent être acceptables pour elle.

L'épaisseur nécessaire pour absorber l'énergie cinétique du mobile ($1/2\ MV^2$) est inversement proportionnelle à la surface S (voir Formule I).

Dans le mécanisme qui vient d'être exposé avec référence à la Figure 1, la section du matériau qui est affectée par le phénomène de compaction est sensiblement égale à la section S du mobile 1. Il vient naturellement à l'esprit qu'il est préférable de recouvrir le matériau d'écrasement 2 par une peau 4, déformable mais plus rigide que ce dernier, comme cela est illustré sur la Figure 2. Les trois schémas successifs a, b et c de cette Figure illustrent la pénétration du mobile 1 dans un matériau d'écrasement 2 recouvert d'une telle peau 4. Comme on peut le voir sur la Figure 2b, la peau 4, en acceptant une certaine déformation, élargit la surface de la zone absorbante. Cependant, dans la plupart des cas, cet élargissement est extrêmement limité. Il faut en effet à cette peau 4 suffisamment de rigidité pour écraser le matériau 2 sous-jacent, mais alors, l'action du mobile 1 sur cette peau rigide 4 crée, sur le pourtour de la zone d'impact, une contrainte importante qui se traduit par le déchirement de la peau 4 : le mobile 1 agit par poinçonnement et la zone écrasée est très peu élargie (Figure 2c). Elle doit donc être très épaisse pour absorber l'énergie incidente.

Le document WO-A-93 21 492 décrit un revêtement d'amortissement dont la résistance des plaques s'oppose à l'impact.

Le but de la présente invention est de proposer un revêtement amortisseur, dont la structure est conçue pour amortir l'impact sous une épaisseur réduite.

Le présent inventeur a en effet découvert qu'en donnant à la peau 4, telle que décrite avec référence à la Figure 2, une structure particulière lui permettant d'assurer un élargissement de la zone sollicitée par le choc ou l'impact, l'objectif visé pouvait être atteint avec de remarquables réductions d'épaisseur du revêtement amortisseur. Cette structure particulière de la peau repose sur le principe de couches d'écailles superposées, les écailles, jointives, d'une même couche pouvant être liées, cette liaison pouvant aller jusqu'à la continuité pour certaines des couches.

La présente invention a donc d'abord pour objet un revêtement amortisseur de chocs produits par une collision, ou d'impacts produits par une onde de choc, ledit revêtement comportant au moins une couche d'un matériau d'écrasement destinée à venir recouvrir une surface à protéger, caractérisé par le fait que la couche extérieure du matériau d'écrasement est recouverte par une peau capable d'assurer un élargissement de la zone affectée par le choc ou l'impact, ladite peau comportant la superposition d'au moins trois couches de matériau rigide, chacune desdites couches étant composée d'écailles jointives, pouvant être liées entre elles par des moyens de liaison tels qu'ils peuvent aller jusqu'à être rompus lors de l'application du choc ou de l'impact, une telle liaison entre écailles d'une même couche pouvant par ailleurs, sauf en ce qui concerne au moins une couche médiane, aller jusqu'à la continuité de ladite couche, et, dans le cas où une quelconque couche d'écailles jointives éventuellement liées mais sans aller jusqu'à la continuité, se trouve être directement superposée à une couche du même type, les écailles de l'une de ces couches sont décalées par rapport aux écailles de l'autre couche. (On peut constater que cette condition de décalage se trouve en fait implicitement remplie dans le cas de couches constitutives de la peau, qui seraient prévues comme étant continues).

Conformément à un mode de réalisation parmi d'autres, la peau du revêtement amortisseur selon l'invention comporte au moins deux couches formées chacune d'écailles jointives, liées ou non (autrement dit non continues).

Par ailleurs, dans le cas où une quelconque couche d'écailles jointives, liées ou non, se trouve être superposée à une couche du même type, les écailles de l'une des couches sont avantageusement disposées en quinconce par rapport aux écailles de l'autre couche.

Un mode de réalisation simple de la peau du revêtement amortisseur selon la présente invention va maintenant être décrit avec référence aux Figures 3 à 6 du dessin annexé :

- les Figures 3a, 3b et 3c sont des vues schématiques partielles, illustrant ce mode de réalisation simple, respectivement en coupe et en perspective, en plan et en perspective éclatée ;
- les Figures 4a et 4b illustrent en première approximation le fonctionnement de ce type de revêtement ;
- la Figure 5 est une représentation schématique - qui suppose les écailles parfaitement rigides - illustrant le mécanisme de transmission de la force de choc aux couches d'écailles et la répartition non uniforme des pressions engendrées dans le matériau absorbant ; et
- la Figure 6 illustre la conséquence de cette répartition non uniforme des contraintes.

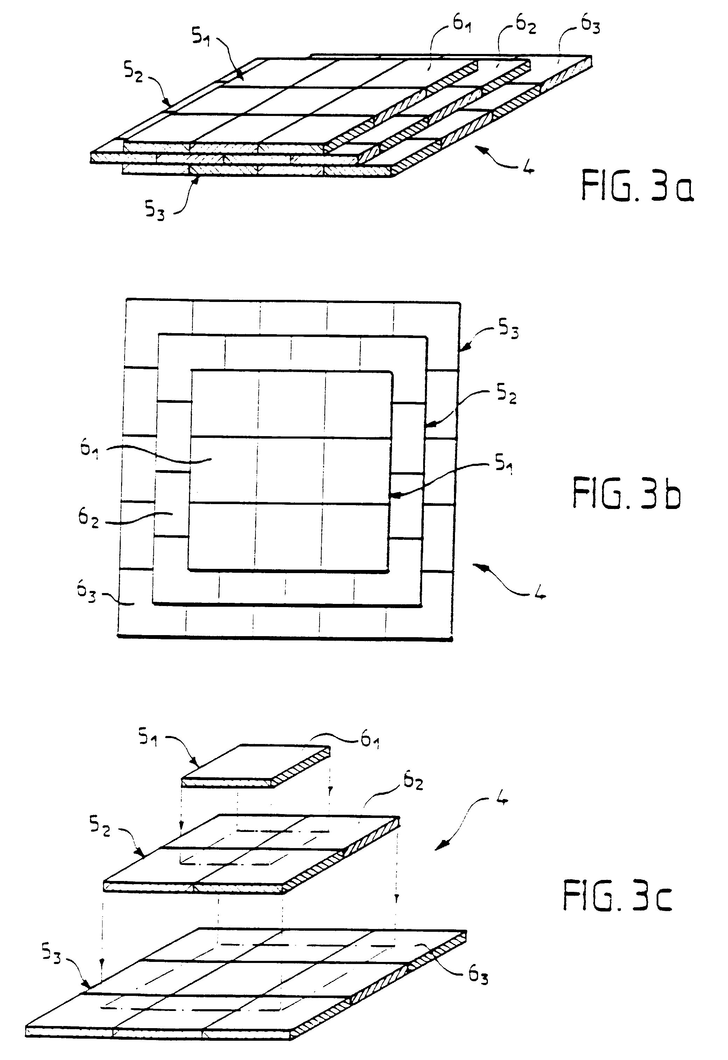

La peau illustrée sur la Figure 3 est composée de trois couches $5_1$, $5_2$ et $5_3$ formées chacune d'écailles respectivement $6_1$, $6_2$ et $6_3$. Les écailles sont de forme carrée et elles sont décalées en quinconce d'une couche à l'autre.

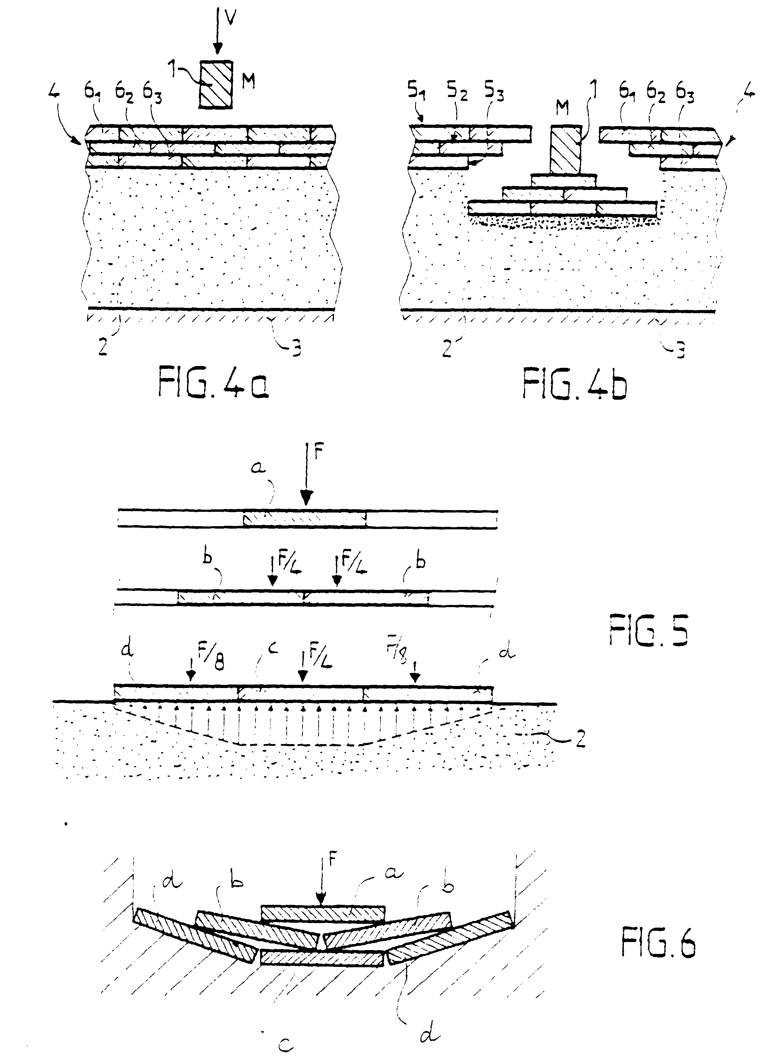

Le fonctionnement de ce type de revêtement peut être décrit en première approximation avec référence à la Figure 4 :

Lorsque le mobile 1 rencontre, lors de sa chute, une première écaille $6_1$, il entraîne celle-ci et le mobile résultant, composé du mobile 1 et de cette écaille $6_1$ possède la même énergie cinétique que celle qu'emportait le mobile 1. Cependant, la mise en mouvement de cette première écaille $6_1$ entraîne celle des quatre écailles $6_2$ situées en-dessous (couche $5_2$), lesquelles entraînent elles-mêmes les neuf écailles $6_3$ situées sur la couche suivante $5_3$ (Figure 4b). L'énergie incidente est utilisée en partie à mettre en mouvement les quatorze écailles, ce qui, par rapport à un mobile de faible masse et grande vitesse, peut ne pas être négligeable. En outre, la surface affectée par l'écrasement correspond aux neuf écailles $6_3$ de la troisième couche $5_3$, ce qui permet, toutes choses égales par ailleurs, de réduire sensiblement les efforts transmis aux matériaux absorbants.

Toutefois, le phénomène réel n'est pas aussi simple que le laisserait penser la Figure 4, et le coefficient d'élargissement de l'impact dans le cas particulier considéré n'est pas de 9 comme il résulterait du nombre d'écailles mises en mouvement. En effet, la Figure 5 montre bien que la force appliquée est sensiblement plus réduite sous les écailles périphériques. Si le mobile 1 exerce sur l'écaille a une force F, l'écaille c transmet en effet une force centrée F/4, et les écailles latérales d une force centrée F/8.

Cette répartition non uniforme des contraintes tend à faire pivoter les écailles comme l'indique schématiquement la Figure 6. On voit sur cette figure que les écailles b sont pincées entre les écailles a et c, et l'effet de ce pincement sera d'autant plus fort que le matériau situé en-dessous aura une résistance à l'écrasement plus élevée. Mais les écailles d, elles, auront tendance à pivoter. Ce faisant elles auront elles-mêmes tendance à faire pivoter les écailles b, ce pivotement s'opposant au pincement entre les écailles a et c et ayant tendance à écarter l'écaille c de l'écaille a. C'est pourquoi on a intérêt à assurer une certaine liaison entre les écailles et tout particulièrement entre celles de la dernière couche, sachant que si cette liaison est trop forte par rapport à la résistance à la traction du matériau employé pour ces écailles, celles-ci se casseront au lieu de pivoter. On conçoit que, dans certains cas, cette liaison ait avantage à aller jusqu'à la continuité de la couche.

Les propriétés mécaniques du matériau constituant les écailles jouent ainsi un rôle important et doivent être adaptées au cas particulier : énergie du mobile et surface de l'impact, résistance à l'écrasement du matériau situé sous les écailles (celle-ci doit aussi être choisie en tenant compte de ce qui est dessous). Il est en général avantageux que les écailles soient faites dans un matériau de module d'élasticité relativement élevé. Mais la cassure des écailles qui ne présente guère d'inconvénient en face de l'impact (là où les forces sont les plus élevées), car elle absorbe de l'énergie, peut être pire que la flexion sur les bords du "piston" (là ou les contraintes sont plus faibles). Il peut donc y avoir un compromis entre le module d'élasticité et la fragilité.

Ainsi, il est généralement intéressant, pour réaliser la peau du revêtement amortisseur selon l'invention, que les écailles soient telles que leur résistance mécanique est normalement suffisante pour que les contraintes qui leur sont appliquées au moment de l'impact avec mise en mouvement restent inférieures à la valeur qui provoquerait le poinçonnement de la peau, le matériau constituant les écailles étant alors avantageusement un matériau élastique, non susceptible d'atteindre sa limite d'élasticité lorsqu'il subit la contrainte due au choc ou à l'impact. Cependant, ladite peau peut comprendre des écailles susceptibles de se fracturer avec absorption d'énergie sous l'effet direct de l'impact avec mise en mouvement. On peut également prévoir que les écailles soient telles qu'elles peuvent résister à la fracturation sous l'effet des contraintes plus réduites constatées à distance latérale de l'impact, alors que les contraintes plus élevées ressenties en face de l'impact sont supérieures à celles qui provoqueraient la fracturation des écailles accompagnée d'absorption d'énergie ; ce choix de valeurs permet ainsi à la fois aux écailles latérales de continuer à répartir l'impact et aux écailles centrales d'absorber de l'énergie par leur fracturation.

La dimension choisie pour les écailles de la première couche (couche externe) par rapport aux dimensions de l'impact (mobile M) dépend aussi des propriétés mécaniques du matériau choisi pour cette première couche par rapport à la violence du choc. A priori, on a intérêt à entraîner le "piston" le plus grand possible, mais si on dépasse une certaine surface dès cette première couche, l'écaille sera poinçonnée et l'effet de répartition sera réduit. Cette observation conduit à choisir pour les écailles de la première couche une dimension égale au moins à la surface d'impact du mobile, correspondant en quelque sorte au "pré-poinçonnement", mais il peut y avoir intérêt à choisir une dimension plus grande.

On a vu qu'il y avait intérêt à établir une certaine liaison entre les écailles : si le matériau constituant les écailles est à la fois rigide et ductile, on peut même avoir intérêt - et en particulier intérêt économique - à ce que cette première couche soit continue.

La structure de la peau se traduit par un élargissement de l'impact d'une couche à l'autre. Le nombre de couches d'écailles dépend donc du coefficient d'élargissement que l'on veut donner à l'impact pour en répartir les contraintes. D'autres considérations, notamment économiques, peuvent également intervenir.

Les écailles sont constituées par des plaques qui peuvent présenter différentes formes. Si l'impact attendu est statistiquement symétrique par rapport à un point, il est préférable que les écailles aient elles-mêmes une forme qui ait un centre de symétrie et qui permette de former une mosaïque jointive. Le triangle, le carré et l'hexagone sont des polygones réguliers qui répondent à ces conditions et permettent de construire des couches qui répartissent avantageusement l'effort et l'élargissement de façon progressive.

Les écailles peuvent être réalisées, selon les cas, avec différents matériaux, tels que notamment l'acier et les métaux, le ciment, le béton, le verre, les matières céramiques, les matières plastiques, les matériaux composites, la brique, le grés et similaires, cette liste n'étant pas limitative.

Les différentes couches de la peau du revêtement selon l'invention peuvent ne pas être réalisées ni avec le même matériau, ni avec la même dimension. En effet, les forces et les contraintes auxquelles sont soumises les écailles des couches successives ne sont pas les mêmes. L'impact initial qui s'applique sur une ou plusieurs écailles de la première couche, avec éventuellement des contraintes dues au choc susceptibles de fracturer le matériau de l'écaille, est réparti et amorti au fur et à mesure qu'il passe d'une couche d'écailles la suivante. On peut donc optimiser le choix du matériau et des dimensions à chaque couche. Il convient cependant de veiller à maintenir le mécanisme de transmission des forces et moments, décrit ci-dessus, en raison de son "effet de piston" capable d'entraîner un volume important de matériau d'écrasement dans la dissipation de l'énergie cinétique du mobile.

Les écailles peuvent par ailleurs comporter, comme on l'a vu, des moyens de liaison réciproque au moins au sein d'une même couche, ces moyens étant susceptibles d'être rompus le cas échéant avec absorption d'énergie au moment du choc ou de l'impact, et étant du type liant de faible résistance, fils d'accrochage, lignes de moindre résistance formées par exemple par un gaufrage dans un mat continu suivant le motif des écailles. Une telle disposition permet de réaliser une peau continue, d'un seul tenant, ce qui est souvent commode dans la pratique pour la fabrication du revêtement ou pour son application à la surface à protéger. Au moment de l'impact, ces moyens provisoires de liaison se rompent en absorbant de l'énergie. L'essentiel est que la zone de moindre résistance soit située sur le pourtour des écailles. C'est pour cette raison que l'on peut réaliser un assemblage d'écailles sous la forme d'un mat continu où la séparation des écailles est marquée simplement par un gaufrage préfigurant les lignes de rupture souhaitées.

Dans ce même but de réaliser une peau d'un seul tenant, aisément manipulable pour la pose, au moins une couche d'écailles du revêtement peut être maintenue par un film ou une enveloppe susceptible d'être rompus le cas échéant avec absorption d'énergie au moment du choc ou de l'impact. Il n'est en effet pas nécessaire que ce film ou cette enveloppe jouent un grand rôle dans le phénomène d'amortissement de l'impact.

En général, le choix du matériau d'écrasement, qui dépend également du cas particulier considéré, est guidé par la contrainte que peut supporter la surface à protéger. Il peut s'agir d'une contrainte admissible indifférente à la surface sur laquelle on a réparti l'impact (cas d'un genou d'automobiliste par exemple) ou, au contraire, d'une contrainte qui dépend de la surface sur laquelle elle est appliquée et éventuellement de son point d'application. Par exemple, dans le cas d'un voile de béton maintenu à la périphérie : la contrainte admissible est d'autant plus faible que la dimension du voile entre ses supports est grande et que la distance du point d'impact au pourtour du voile est élevée.

Il faut, en tout cas, que la pression d'écrasement transmise par le matériau, finalement exercée sur la surface à protéger, soit inférieure en tout point à cette contrainte admissible.

Comme matériau d'écrasement du revêtement amortisseur selon l'invention, on peut ainsi employer, selon les cas, toutes sortes de matériaux amortisseurs d'énergie. Parmi ces matériaux, on peut citer les matériaux poreux, tels que les bétons contenant des billes de polystyrène expansé, les matériaux foisonnants, tels que les paquets de fibres, les mousses de toutes sortes de matériaux minéraux ou de matières plastiques, les cartons, les composites obtenus à partir d'un liant et de billes ou de microbilles creuses en matière plastique, en verre, en argile, en matière céramique, les nids d'abeilles en différents matériaux, les enveloppes élastiques gonflées de gaz, etc., sans que cette énumération soit limitative.

Dans certains cas, il est avantageux d'employer plusieurs couches de matériau d'écrasement de caractéristiques mécaniques différentes. En effet, l'étalement de l'impact initial (impact primaire) grâce au revêtement qui vient d'être décrit a pour effet d'appliquer sur sa surface interne un impact (impact secondaire) caractérisé par une valeur de la contrainte maximum au centre plus réduite que la contrainte appliquée par le mobile initial et étalée de part et d'autre. Si au lieu d'appliquer cette surface interne directement sur la paroi à protéger, on l'applique sur une nouvelle couche de revêtement de même nature que la précédente (une peau plus un matériau amortisseur), on va produire un nouvel étalement et une nouvelle absorption de l'impact. La structure de la peau et le choix du matériau amortisseur de cette deuxième partie du revêtement doivent être adaptés aux caractéristiques de l'impact secondaire, qui donnera à son tour un impact tertiaire ... Au fur et à mesure que l'impact sera ainsi transformé, il sera même possible de simplifier la ou les structures du revêtement. Une séparation entre les couches constituée par une simple couche raide élastique ou non, pourra suffire, comme on le verra sur les exemples ci-dessous. L'invention concerne donc également un revêtement protecteur tel que défini ci-dessus, dans lequel le matériau d'écrasement est composé de plusieurs couches de matériaux absorbeurs d'énergie, éventuellement séparées par des couches de matériau dur et rigide, continues ou composées d'écailles jointives.

L'opportunité de découper le matériau amortisseur en au moins deux couches différentes, résulte du fait que le matériau assure deux fonctions. D'une part, il résiste à l'enfoncement de l'écaille centrale par étalement des contraintes (voir Figure 6), ce qui implique qu'il soit relativement résistant à l'écrasement, d'autre part il absorbe par sa compaction l'énergie de l'impact, ce qui implique qu'il soit relativement facile écraser. Il est avantageux dans certains cas de faire assurer ces deux fonctions par deux couches successives de matériau amortisseur, la première de contrainte d'écrasement relativement élevée, l'autre de contrainte d'écrasement plus faible.

Les exemples ci-après illustrent encore la présente invention.

Exemple 1

Une masse cylindrique de 200 kg, de 300 mm de diamètre moyen, tombe d'une hauteur de 11 m sur un bloc de mousse polyuréthanne de 50 cm d'épaisseur et de 150 cm de côté. La densité de la mousse est de 0,2, la résistance à l'écrasement, de 3100 kPa.

La vitesse d'impact est de 15 m/s environ.

Après impact, le bloc de mousse présente une empreinte circulaire de 300 mm de diamètre, profonde de 34,4 mm. La décélération du mobile, mesurée grâce à des accéléromètres, atteint 2300 m/s$^2$.

Le même impact est ensuite réalisé en protégeant le bloc de mousse avec trois couches d'écailles carrées de béton non armé, de 50 cm de côté et de 4 cm d'épaisseur, disposées en quadrillage sur une même couche et en quinconce d'une couche à l'autre. La couche supérieure d'écailles est recouverte d'une plaque d'acier de 5 mm d'épaisseur, laquelle constitue une couche externe continue de la peau du revêtement amortisseur selon l'invention, recevant l'impact. Un certain rebond se produit au cours de l'essai. L'écrasement maximum est de 7,1 mm et la décélération mesurée atteint 5800 m/s$^2$.

Expérimentalement, dans ce cas, l'utilisation de la peau d'écailles dans une forme relativement simple, divise par 4,85 l'épaisseur écrasée.

Exemple 2

Un projectile de 81 mm de diamètre est projeté sur une cible rigide à 170 m/s environ. La force maximum exercée sur la cible est de 138 kN. L'énergie du mobile est de 6700 J.

En cas d'impact dans une mousse de résistance à l'écrasement 5 bars, non protégée par une peau conforme à la présente invention, l'absorption de l'énergie impliquerait l'écrasement d'une épaisseur supérieure à 2800 mm (cf. Formule I).

Ce projectile a été tiré sur une cible composée de deux couches, de 7,5 cm d'épaisseur chacune, de matériau d'écrasement formé à partir de billes creuses d'alumine de 3 mm de diamètre (résistance à l'écrasement 5 bars), ces deux couches étant séparées par une couche de verre feuilleté STADIP (verre composé de deux feuilles de verre de 3 mm d'épaisseur séparées par une couche de polyvinylbutyral de 1 mm d'épaisseur). Sur la face avant de la cible, on a placé trois couches de plaques jointives d'alliage d'aluminium AU 4G, d'épaisseur 1,5 mm, disposées en quadrillage sur une même couche et en quinconce d'une couche à l'autre.

On constate que la force maximum de l'impact, mesurée au dos de la cible, est inférieure à 30 kN, soit une réduction d'un coefficient 4,5. Les écailles sont déformées, mais n'ont pas été poinçonnées. La plaque de verre située à mi-épaisseur de la couche d'écrasement a été déformée de 21 mm seulement au centre, alors que, si la cible n'avait été composée que de la couche d'écrasement, on aurait dû constater la perforation.

La zone déformée sur la couche extérieure d'écailles est d'un diamètre de 200 mm, ce qui signifie que l'impact se répartit sur une surface qui dépasse 4,6 fois la surface du projectile.

Exemple 3

Une enceinte de béton, de 20 m de rayon et de 55 cm d'épaisseur, doit être protégée contre les chutes d'avions. Le projectile est supposé peser 13 tonnes. La vitesse d'impact est de 600 km/h.

Le calcul et les expérimentations à échelle réduite ont montré que la protection de l'enceinte pouvait être obtenue en disposant sur l'enceinte un revêtement amortisseur ainsi constitué à partir de la paroi à protéger :

- une couche de 60 cm d'épaisseur d'un matériau de résistance à l'écrasement 4 bars, composé de billes creuses d'alumine MICROCEL de diamètre 3 mm, légèrement agglomérées par un liant minéral ;

- une couche intermédiaire de 5 cm de béton de haute performance, de densité 2,45, comportant 30 kg/m$^3$ de fibres commercialisées sous la dénomination FIBRAFLEX par la Société Pont-à-Mousson, de module d'élasticité 28 000 MPa ;

- une couche de 40 cm d'épaisseur, d'un matériau d'écrasement formé de béton allégé, de densité 0,7, comportant des billes de polystyrène expansé lui conférant légèreté et capacité d'écrasement et des fibres de fonte amorphe FIBRAFLEX pour assurer le renforcement ; ce béton avait une résistance à l'écrasement de 20 bars ; et

- une peau formée de 3 couches superposées d'écailles de 2 m de côté et 5 cm d'épaisseur, fabriquées avec le béton de très haute performance indiqué ci-dessus, et disposées comme dans le cas des Exemples 1 et 2, les écailles des première et troisième couches étant solidarisées par des joints en béton armé dont le ferraillage est inséré dans les écailles au moment de leur fabrication.

Si le revêtement amortisseur ne comportait que le matériau d'écrasement, il serait nécessaire de prévoir pour ce dernier une épaisseur de plusieurs mètres.

Exemple 4

On obtient la protection d'une paroi en acier de 5 mm d'épaisseur contre un éclat de projectile de 5 kg et de 0,8 dm$^2$ de surface d'impact, dont la vitesse est de 15 m/s.

Pour ce faire, on la protège à l'aide d'une couche de 10 cm de mousse de polystyrène de contrainte d'écrasement 8 bars, revêtue d'une peau composée de trois couches d'écailles de 5 cm de côté et de 5 mm d'épaisseur, posées en quinconce comme dans les exemples précédents, la couche supérieure étant composée d'écailles d'acier, et les deux autres, d'écailles de verre. On a obtenu une protection analogue dans les trois cas suivants : en remplaçant la couche supérieure par une tôle d'acier continue ; en remplaçant la couche inférieure, adjacente à la mousse, par des vitres jointives de dimensions largement supérieures à 5 cm (ce qui revient sensiblement à l'emploi d'une vitre continue) ; et en remplaçant à la fois les première et troisième couches d'écailles, respectivement par la tôle d'acier et par la vitre.

Exemple 5

On obtient la protection d'une paroi en acier de 5 mm d'épaisseur, contre les balles de Magnum 144 pesant 16 g et dotées d'une vitesse de 440 m/s, à l'aide d'une couche de 7,5 cm d'épaisseur de matériau absorbant, dont la contrainte à l'écrasement est de 20 bars, recouverte par trois couches d'écailles en Duralumin, de 5 cm de côté et de 3 mm d'épaisseur, posées en quinconce comme dans les Exemples précédents.

Il est bien entendu que les modes de réalisation ci-dessus décrits ne sont aucunement limitatifs et pourront donner lieu à toutes modifications désirables sans sortir pour cela du cadre de l'invention.

## Revendications

1. Revêtement amortisseur de chocs produits par une collision, ou d'impacts produits par une onde de choc, ledit revêtement comportant au moins une couche d'un matériau d'écrasement (2) destinée à venir recouvrir une surface à protéger, caractérisé par le fait que la couche extérieure du matériau d'écrasement (2) est recouverte par une peau (4) capable d'assurer un élargissement de la zone affectée par le choc ou l'impact, ladite peau (4) comportant la superposition d'au moins trois couches de matériau rigide, chacune desdites couches étant composée d'écailles jointives ($6_1$ ; $6_2$ ; $6_3$), pouvant être liées entre elles par des moyens de liaison tels qu'ils peuvent aller jusqu'à être rompus lors de l'application du choc ou de l'impact, une telle liaison entre écailles ($6_1$ ; $6_2$ ; $6_3$) d'une même couche pouvant par ailleurs, sauf en ce qui concerne au moins une couche médiane, aller jusqu'à la continuité de ladite couche, et, dans le cas où une quelconque couche d'écailles jointives ($6_1$ ; $6_2$ ; $6_3$) éventuellement liées mais sans aller jusqu'à la continuité, se trouve être directement superposée à une couche du même type, les écailles ($6_1$ ; $6_2$ ; $6_3$) de l'une de ces couches sont décalées par rapport aux écailles ($6_1$ ; $6_2$ ; $6_3$) de l'autre couche.

2. Revêtement amortisseur selon la revendication 1, caractérisé par le fait que la peau (4) comporte au moins deux couches formées chacune d'écailles jointives ($6_1$ ; $6_2$ ; $6_3$), liées ou non.

3. Revêtement amortisseur selon l'une des revendications 1 et 2, caractérisé par le fait que, dans le cas où une quelconque couche d'écailles jointives ($6_1$ ; $6_2$ ; $6_3$), liées ou non, se trouve être superposée à une couche du même type, les écailles ($6_1$ ; $6_2$ ; $6_3$) de l'une des couches sont disposées en quinconce par rapport aux écailles ($6_1$; $6_2$ ; $6_3$) de l'autre couche.

4. Revêtement amortisseur selon l'une des revendications 1 à 3, caractérisé par le fait que les écailles ($6_1$ ; $6_2$ ; $6_3$) sont constituées par des plaques ayant la forme d'un polygone régulier, tel que le triangle, le carré et l'hexagone.

5. Revêtement amortisseur selon l'une des revendications 1 à 4, caractérisé par le fait que les écailles ($6_1$ ; $6_2$ ; $6_3$) sont telles que leur résistance mécanique est suffisante pour que les contraintes qui leur sont appliquées au moment de l'impact avec mise en mouvement restent inférieures à la valeur qui provoquerait le poinçonnement de la peau (4).

6. Revêtement amortisseur selon l'une des revendications 1 à 4, caractérisé par le fait que la peau (4) comprend des écailles ($6_1$ ; $6_2$ ; $6_3$) susceptibles de se fracturer avec absorption d'énergie sous l'effet direct de l'impact avec mise en mouvement.

7. Revêtement amortisseur selon l'une des revendications 1 à 4, caractérisé par le fait que les écailles ($6_1$ ; $6_2$ ; $6_3$) sont telles qu'elles peuvent résister à la fracturation sous l'effet des contraintes plus réduites constatées à distance latérale de l'impact, alors que les contraintes plus élevées ressenties en face de l'impact sont supérieures à celles qui provoqueraient la fracturation des écailles accompagnée d'absorption d'énergie.

8. Revêtement amortisseur selon l'une des revendications 1 à 7, caractérisé par le fait que les écailles ($6_1$ ; $6_2$ ; $6_3$) comportent des moyens de liaison réciproque au moins au sein d'une couche, ces moyens étant susceptibles d'être rompus le cas échéant avec absorption d'énergie au moment du choc ou de l'impact, et étant du type liant de faible résistance, fils d'accrochage, lignes de moindre résistance formées par exemple par un gaufrage dans un mat continu suivant le motif des écailles ($6_1$ ; $6_2$ ; $6_3$).

9. Revêtement amortisseur selon l'une des revendications 1 à 8, caractérisé par le fait qu'au moins une couche d'écailles ($6_1$ ; $6_2$ ; $6_3$) est maintenue par un film ou une enveloppe susceptible d'être rompu le cas échéant avec absorption d'énergie au moment du choc ou de l'impact.

10. Revêtement amortisseur selon l'une des revendications 1 à 9, caractérisé par le fait que les écailles ($6_1$ ; $6_2$ ; $6_3$) sont réalisées en un matériau choisi parmi le ciment, le béton, les métaux, l'acier, le verre, les matières céramiques, les matières plastiques, les matériaux composites, la brique, le grés et similaires.

11. Revêtement amortisseur selon l'une des revendications 1 à 10, caractérisé par le fait que le matériau d'écrasement (2) est un matériau absorbeur d'énergie choisi parmi les matériaux poreux, tels que les bétons contenant des billes de polystyrène expansé, les matériaux foisonnants, tels que les paquets de fibres, les mousses de toutes sortes de matériaux minéraux ou de matières plastiques, les cartons, les composites obtenus à partir d'un liant et de billes ou de microbilles creuses en matière plastique, en verre, en argile, en matière céramique, les nids d'abeilles en différents matériaux, les enveloppes élastiques gonflées de gaz, et similaires.

12. Revêtement amortisseur selon l'une des revendications 1 à 11, caractérisé par le fait que le matériau d'écrasement (2) est composé de plusieurs couches de matériaux absorbeurs d'énergie, éventuellement séparées par des couches de matériau dur et rigide, continues ou composées d'écailles jointives ($6_1$ ; $6_2$ ; $6_3$).

## Patentansprüche

1. Verkleidung zur Dämpfung von Stößen, die durch eine Kollision oder durch heftige Schläge oder Aufprall, erzeugt durch eine Schallwelle, hervorgerufen sind, wobei die Verkleidung wenigstens eine Schicht aus einem unter Druck sich verformenden Material (2) umfassen, das dazu bestimmt ist, eine zu schützende Fläche abzudecken, dadurch gekennzeichnet, daß die äußere Schicht des Druckverformungsmaterials (2) mit einer Haut (4) überdeckt ist, die in der Lage ist, eine Verbreiterung der Zone sicherzustellen, die durch den Stoß oder den Aufprall oder Schlag beeinträchtigt ist, wobei diese Haut (4) die Überlagerung wenigstens dreier Schichten aus steifem Material umfaßt, jede dieser Schichten aus Schuppen oder Schalen ($6_1$; $6_2$; $6_3$) zusammengesetzt ist, welche untereinander durch Verbindungsmittel verknüpft werden können, so, daß sie bis zum Brechen bei der Aufbringung des Schlags oder Aufpralls gebracht werden können, wobei eine solche Verbindung zwischen Schalen oder Schuppen ($6_1$; $6_2$; $6_3$) ein und der gleichen Schicht im übrigen, abgesehen von wenigstens einer Mittelschicht, bis zur Kontinuität dieser Schicht gehen kann und für den Fall, wo eine beliebige Schicht von aneinander anliegenden Schalen ($6_1$; $6_2$; $6_3$), die gegebenenfalls verbunden sind, ohne jedoch bis zur Kontinuität zu gehen, direkt von einer Schicht des gleichen Typs überlagert ist, wobei die Schalen ($6_1$; $6_2$; $6_3$) der einen dieser Schichten versetzt bezüglich den Schalen ($6_1$; $6_2$; $6_3$) der anderen Schicht sind.

2. Dämpfende Verkleidung nach Anspruch 1, dadurch gekennzeichnet, daß die Haut (4) wenigstens zwei Schichten umfaßt, die je aus aneinander anliegenden gegebenenfalls verbundenen Schalen ($6_1$; $6_2$; $6_3$) gebildet sind.

3. Dämpfende Verkleidung nach einem der Ansprüche 1 und 2, dadurch gekennzeichnet, daß für den Fall, wo eine beliebige Schicht von aneinander anliegenden, gegebenenfalls verknüpften Schalen ($6_1$; $6_2$; $6_3$) einer Schicht des gleichen Typs überlagert ist, wobei die Schalen ($6_1$; $6_2$; $6_3$) einer der Schichten schachbrettartig bezüglich der Schalen ($6_1$; $6_2$; $6_3$) der anderen Schicht angeordnet sind.

4. Dämpfende Verkleidung nach einem der Ansprüche 1 bis 3, dadurch gekennzeichnet, daß die Schalen ($6_1$; $6_2$; $6_3$) durch Platten gebildet sind, die die Form eines regelmäßigen Polygons, beispielsweise des Dreiecks, des Quadrats und des Hexagons haben.

5. Dämpfende Verkleidung nach einem der Ansprüche 1 bis 4, dadurch gekennzeichnet, daß die Schalen ($6_1$; $6_2$; $6_3$) derart sind, daß ihr mechanischer Widerstand ausreicht, damit die Beanspruchungen, die hierauf im Augenblick des Aufpralls unter In-Bewegung-Setzen ausgeübt werden, unterhalb des Wertes verbleiben, der das Eindrücken oder das Lochen der Haut (4) hervorrufen würde.

6. Dämpfende Verkleidung nach einem der Ansprüche 1 bis 4, dadurch gekennzeichnet, daß die Haut (4) Schalen ($6_1$; $6_2$; $6_3$) umfaßt, die in der Lage sind, unter Absorption von Energie bei direktem Aufpralleffekt unter In-Bewegung-Setzen zu reißen bzw. zu brechen.

7. Dämpfende Verkleidung nach einem der Ansprüche 1 bis 4, dadurch gekennzeichnet, daß die Schalen ($6_1$; $6_2$; $6_3$) derart sind, daß sie der Frakturierung oder dem Brechen unter dem Einfluß von geringeren Beanspruchungen, die unter seitlichem Abstand vom Aufprall festgestellt werden, widerstehen können, während die höheren Beanspruchungen, die an der Oberfläche des Aufpralls erfahren werden, größer als die sind, welche die Frakturierung oder die Rißbildung der Schalen, begleitet von Energieabsorption hervorrufen würden.

8. Dämpfende Verkleidung nach einem der Ansprüche 1 bis 7, dadurch gekennzeichnet, daß die Schalen ($6_1$; $6_2$; $6_3$) Mittel zur reziproken Verbindung, wenigstens in der Mitte einer Schicht, umfassen, wobei diese Mittel in der Lage sind, gegebenenfalls unter Absorption von Energie im Augenblick des Stoßes oder des Aufpralls zu brechen und vom Typ Verbindungsmittel mit geringer Festigkeit wie Einhängedrähte, Leitungen geringerer Beständigkeit sind, die beispielsweise durch eine Prägung in einer kontinuierlichen Matte, die dem Muster der Schalen ($6_1$; $6_2$; $6_3$) folgen, gebildet sind.

9. Dämpfende Verkleidung nach einem der Ansprüche 1 bis 8, dadurch gekennzeichnet, daß wenigstens eine Schicht von Schalen ($6_1$; $6_2$; $6_3$) durch einen Film oder eine Umhüllung gehalten wird, die in der Lage ist, gegebenenfalls unter Absorption von Energie im Augenblick des Stoßes oder Aufpralls zerbrochen zu werden.

10. Dämpfende Verkleidung nach einem der Ansprüche 1 bis 9, dadurch gekennzeichnet, daß die Schalen ($6_1$; $6_2$; $6_3$) aus einem Material hergestellt sind, das gewählt ist aus Zement, Beton, Metallen, Stahl, Glas, keramischen Materialien, plastischen Materialien, Verbundmaterialien, Ziegel, Sandstein bzw. Serizin und dergleichen.

11. Dämpfende Verkleidung nach einem der Ansprüche 1 bis 10, dadurch gekennzeichnet, daß das Druckverformungsmaterial (2) ein energieabsorbierendes Material ist, das gewählt ist aus den porösen Materialien wie den Betons, welche Kügelchen aus geschäumtem Polystyrol enthalten, aufquellenden Materialien wie Faserpaketen, Schäumen aller Art aus mineralischen Materialien oder Kunststoffmaterialien, Kartons, Verbundmaterialien, die erhalten werden aus einem Bindemittel und Kugeln oder hohlen Mikrokugeln aus Kunststoff, Glas, Ton, keramischem Material, bienenwabenartige Konstruktionen aus verschiedenen Materialien, elastischen mit Gas geblähten Hüllmaterialien und dergleichen.

12. Dämpfende Verkleidung nach einem der Ansprüche 1 bis 11, dadurch gekennzeichnet, daß das Druckverformungsmaterial (2) aus mehreren Schichten von energieabsorbierenden Materialien zusammengesetzt ist, die gegebenenfalls durch Schichten aus hartem und steifem Material getrennt sind, die kontinuierlich oder aus aneinander anliegenden Schalen oder Schuppen ($6_1$; $6_2$; $6_3$) zusammengesetzt sind.

**Claims**

1. A covering for absorbing shocks produced by a collision or impact produced by a shockwave, said covering comprising at least one layer of a compression material (2) designed to cover a surface to be protected, characterised in that the external layer of the compression material (2) is covered by a skin (4) capable of spreading the zone affected by the shock or impact, said skin (4) being made up by laying one on top of the other at least three layers of rigid material, each of said layers comprising contiguous scales ($6_1$ ; $6_2$ ; $6_3$), which can be interlinked by linkage means such that they can reach breaking point under the force of the shock or impact, such a link between scales ($6_1$ ; $6_2$ ; $6_3$) of a same layer being used to an extent where continuity is produced in said layer, except where at least one median layer is involved, and where any one layer of contiguous scales ($6_1$; $6_2$ ; $6_3$), possibly linked but not continuously so, is located directly above a layer of the same type, the scales ($6_1$ ; $6_2$ ; $6_3$) of one of these layers are offset relative to the scales ($6_1$ ; $6_2$ ; $6_3$) of the other layer.

2. A shock-absorbing covering as claimed in claim 1, characterised in that the skin (4) has at least two layers, each made up of contiguous scales ($6_1$ ; $6_2$ ;

$6_3$), which may be linked or not.

3. A shock-absorbing covering as claimed in one of claims 1 and 2, characterised in that if any one layer of contiguous scales ($6_1$ ; $6_2$ ; $6_3$), linked or not linked, is located above a layer of the same type, the scales ($6_1$ ; $6_2$ ; $6_3$) of one of the layers are arranged in staggered rows with respect of the scales ($6_1$ ; $6_2$ ; $6_3$) of the other layer.

4. A shock-absorbing covering as claimed in one of claims 1 to 3, characterised in that the scales ($6_1$ ; $6_2$; $6_3$) are plates having the shape of a regular polygon, such as a triangle, a square or a hexagon.

5. A shock-absorbing covering as claimed in one of claims 1 to 4, characterised in that the scales ($6_1$ ; $6_2$; $6_3$) are such that their mechanical strength is high enough to ensure that the stress applied to them at the moment of impact, allowing movement, remains at a value below that which would cause puncturing of the skin (4).

6. A shock-absorbing covering as claimed in one of claims 1 to 4, characterised in that the skin (4) is made up of scales ($6_1$ ; $6_2$ ; $6_3$) capable of fracturing as they absorb energy under the direct effect of the impact, causing them to move.

7. A shock-absorbing covering as claimed in one of claims 1 to 4, characterised in that the scales ($6_1$ ; $6_2$ ; $6_3$) are such that they are capable of resisting fracture under the effect of the reduced stress recorded at a lateral distance from the impact whilst the stress felt at the centre of the impact is higher than that which would be needed to cause the scales to fracture as they absorbed energy.

8. A shock-absorbing covering as claimed in any one of claims 1 to 7, characterised in that the ($6_1$ ; $6_2$ ; $6_3$) have reciprocal linkage means at least within one layer, these means being capable of breaking if need be as they absorb energy at the instant of the shock or impact and being of the type such as a low-strength bonding material, hooking wires, lines of least resistance formed for example by embossing in a continuous mat following the pattern of the scales ($6_1$ ; $6_2$ ; $6_3$).

9. A shock-absorbing covering as claimed in one of claims 1 to 8, characterised in that at least one layer of scales ($6_1$; $6_2$ ; $6_3$) is retained by a film or an envelope capable of rupturing if need be as energy is absorbed at the instant of shock or impact.

10. A shock-absorbing covering as claimed in one of claims 1 to 9, characterised in that the scales ($6_1$ ; $6_2$; $6_3$) are made from a material selected from among cement, concrete, the metals, steel, glass, ceramic materials, plastics, composite materials, brick, stone and similar.

11. A shock-absorbing covering as claimed in one of claims 1 to 10, characterised in that the compression material (2) is an energy-absorbing material selected from among the porous materials, such as concretes containing expanded polystyrene beads, aerating materials such as bundles of fibres, all kinds of foams of mineral materials or of plastics, cardboard, the composites obtained from a binder and beads or hollow microspheres of plastic material, glass, clay, ceramic material, honeycombs of different materials, gas-filled elastic envelopes and the like.

12. A shock-absorbing covering as claimed in one of claims 1 to 11, characterised in that the compression material (2) is made up of several layers of energy-absorbing materials, optionally separated by layers of hard and rigid material, continuous or composed of contiguous scales ($6_1$ ; $6_2$ ; $6_3$).

FIG.1a

FIG.1b

FIG.2a

FIG.2b

FIG.2c

FIG. 3a

FIG. 3b

FIG. 3c

FIG.4a

FIG.4b

FIG.5

FIG.6